(19) Europäisches Patentamt
European Patent Office
Office européen des brevets

(11) **EP 4 382 904 B1**

(12) **EUROPÄISCHE PATENTSCHRIFT**

(45) Veröffentlichungstag und Bekanntmachung des Hinweises auf die Patenterteilung:
**06.05.2026  Patentblatt 2026/19**

(21) Anmeldenummer: **23210559.3**

(22) Anmeldetag: **17.11.2023**

(51) Internationale Patentklassifikation (IPC):
**G01N 29/04** *(2006.01)*    **G01N 29/22** *(2006.01)*
**G01N 29/265** *(2006.01)*

(52) Gemeinsame Patentklassifikation (CPC):
**G01N 29/043; G01N 29/225; G01N 29/265;**
G01N 2291/044; G01N 2291/056; G01N 2291/105;
G01N 2291/2636

(54) **PRÜFKOPFSONDE ZUR ULTRASCHALL-PRÜFUNG VON RADSATZWELLEN MIT INNENLIEGENDER LÄNGSBOHRUNG**

TEST HEAD PROBE FOR ULTRASONIC TESTING OF WHEEL SET SHAFTS WITH AN INTERIOR LONGITUDINAL BOREHOLE

SONDE DE TEST POUR LE CONTRÔLE PAR ULTRASONS D'ARBRES D'ESSIEUX AVEC ALÉSAGE LONGITUDINAL INTÉRIEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **05.12.2022  DE 102022132244**

(43) Veröffentlichungstag der Anmeldung:
**12.06.2024  Patentblatt 2024/24**

(73) Patentinhaber: **Deutsche Bahn AG**
**10785 Berlin (DE)**

(72) Erfinder:
• **Rohrschneider, Arne**
**14542 Werder (Havel) (DE)**
• **Oelschlägel, Thomas**
**01109 Dresden (DE)**
• **Kurz, Jochen**
**14770 Brandenburg an der Havel (DE)**

(56) Entgegenhaltungen:
**US-A1- 2019 360 976    US-B2- 7 178 418**

**Beschreibung**

Die Erfindung betrifft eine Prüfkopfsonde zur Ultraschall-Prüfung von Radsatzwellen mit innenliegender Längsbohrung, umfassend eine Mehrzahl von zueinander in Bezug auf eine zentrale Mittel-Längsachse der Prüfkopfsonde um jeweils einen Zwischenwinkel versetzt angeordneten Prüfkopfträgern.

Die Radsatzwellen von Schienenverkehrsfahrzeugen werden regelmäßig auf das Vorliegen von Fehlern und Inhomogenitäten kontrolliert. Unter anderem erfolgt eine Prüfung hinsichtlich des Vorliegens von Fehlern im Material der Radsatzwelle. Insbesondere können betriebsbedingte Risse an der Außenoberfläche der Radsatzwelle entstehen. Diese werden mittels einer mit Winkelprüfköpfen ausgestatteten Prüfkopfsonde detektiert, die in einer Innenbohrung der Radsatzwelle linear entlang der Längsachse der Innenbohrung verfahrbar und um diese Längsachse drehbar gelagert ist. Unter Ausnutzung des an sich bekannten Winkelspiegeleffekts können Inhomogenitäten, die im Wesentlichen senkrecht zur Prüffläche bzw. zur Außenoberfläche der Radsatzwelle orientiert sind, nachgewiesen werden. Dieser beruht im Wesentlichen darauf, dass der Prüfstrahl durch zweifache Reflexion - nämlich an der zur Prüffläche entgegengesetzten Außenfläche der Radsatzwelle sowie an der Inhomogenität bzw. am Riss selbst - in Richtung auf den Prüfkopf zurück reflektiert wird und dort detektierbar ist. Aus dem geometrischen Versatz zwischen den Bündelachsen des gesendeten und des empfangenen Prüfstrahls in einer zur Längsachse der Innenbohrung parallelen Bezugsrichtung kann auf die Lage des Risses innerhalb der Radsatzwelle geschlossen werden.

Bei randschichtgehärteten Radsatzwellen erfolgt die Rissbildung jedoch nicht an der Außenoberfläche der Radsatzwelle, sondern in deren innerem Volumen, zumeist direkt unterhalb der randschichtgehärteten Zone. Zur Detektion solcher tief liegender Inhomogenitäten kommt gemäß des Standes der Technik die sog. "Tandemtechnik" zur Anwendung, bei der zwei zueinander beabstandete Winkelprüfköpfe verwendet werden, die unter jeweils gleichem Winkel und in die gleiche Richtung orientiert sind, sowie deren akustische Achsen in derselben Ebene senkrecht zur Prüffläche liegen, wobei ein erster Prüfkopf zum Senden und der jeweils andere Prüfkopf zum Empfangen verwendet wird. Durch Variieren des Abstandes zwischen dem sendenden und dem empfangenden Prüfkopf in einer zur Längsachse der Innenbohrung parallelen Bezugsrichtung können Inhomogenitäten mit unterschiedlicher Tiefenlage nachgewiesen werden, sofern diese senkrecht zur Prüffläche orientiert sind. Dies ist insbesondere in solchen Bereichen einer Radsatzwelle notwendig, wo sich deren Außendurchmesser bzw. Querschnittsfläche verändert, wie z.B. an den Korbbögen im Übergangsbereich zwischen einem Wellensitz und dem Wellenschaft. Diese Bereiche werden im Kontext dieser Erfindung nachfolgend als "Übergangsbereiche" bezeichnet. In solchen Übergangsbereichen folgt die randschichtgehärtete Zone annähernd dem Verlauf der Querschnittsübergänge. Somit liegen die in den Querschnittsübergängen zu erwartenden Fehler in unterschiedlichen Tiefen. Mit zunehmender Tiefenlage eines erwarteten Fehlers muss der Abstand der Prüfköpfe in einer zur Längsachse der Innenbohrung parallelen Bezugsrichtung vergrößert werden. Hierzu können die sendenden bzw. empfangenden Prüfköpfe innerhalb eines Prüfkopfträgers zueinander in einer zur Längsachse der Innenbohrung parallelen Richtung verschiebbar angeordnet sein oder es ist eine Mehrzahl von starren, aber zueinander in dieser Bezugsrichtung gleich beabstandeten empfangenden Prüfköpfen vorgesehen. In beiden Fällen ist gewährleistet, dass ein zu Prüfzwecken ausgesendetes und an Inhomogenitäten in unterschiedlicher Tiefenlage reflektiertes Ultraschallsignal tatsächlich auf einen empfangenden Prüfkopf trifft.

Wird jedoch in solchen Übergangsbereichen der Korbbogen angeschallt, so kommt es wegen der dort fehlenden Parallelität der Außenoberfläche der Radsatzwelle in Bezug auf die Längsachse der Innenbohrung zu Reflexionen, die nicht in dieser Prüfkopfanordnung empfangen werden können. Eine zuverlässige Detektion und Lokalisierung von Inhomogenitäten ist in solchen Bereichen deshalb nicht möglich.

Aus US 7,178,418 B2 und US 2019/0360976 A1 sind Prüfkopfsonden für "Molche" bzw. "pigs" bekannt, die zur zerstörungsfreien Prüfung von langen Rohrleitungen mittels translatorischen Verfahrens entlang der Längserstreckung der Rohrleitung genutzt werden. Solche Prüfkopfsonden umfassen eine Vielzahl von über ihren Außenumfang verteilt angeordneten Prüfköpfen, deren relative Anordnung zueinander eine vollständige Abdeckung der Innenwand der zu prüfenden Rohrleitung während eines solchen translatorischen Verfahrens der Prüfkopfsonde entlang der Längsachse der zu prüfenden Rohrleitung ermöglichen soll. Solche Prüfvorrichtungen sind jedoch auf Wanddickenmessung und oberflächennahe Rissprüfungen von Rohrleitungen optimiert. Hingegen sind Risse, die nicht von einer Oberfläche des Prüfobjekts ausgehen, nicht zuverlässig erfassbar. Deshalb sind solche Vorrichtungen auf die Prüfung von Rohrleitungen beschränkt, da derartige tiefliegende Fehler dort nicht zu erwarten sind.

Der Erfindung liegt daher die technische Aufgabe zugrunde, eine gattungsgemäße Prüfkopfsonde zur Ultraschall-Prüfung von Radsatzwellen mit innenliegender Längsbohrung bereitzustellen, welche diesen vorgenannten Nachteil überwindet sowie die Qualität und Zuverlässigkeit bei der Detektion und Lokalisierung von Inhomogenitäten im Bereich von Querschnittsübergängen verbessert.

Dies wird erfindungsgemäß dadurch gelöst, dass die Prüfkopfträger simultan um diese Mittel-Längsachse drehbar gelagert sind, wobei jeder Prüfkopfträger aufgebaut ist aus einem sendenden Prüfkopf und einer Mehrzahl von entlang einer zur Mittel-Längsachse der Radsatzwelle parallelen Längserstreckung der Prüfkopfsonde angeordneten empfangenden Prüfköpfen, wobei der sendende Prüfkopf mindestens eines ersten Prüfkopfträgers der Prüfkopfsonde zu einem Schallaustritt eines Schallbündels unter einem in Bezug auf eine Grenzflächennormale am Schallaustrittspunkt im mathematisch positiven Sinn ausgelenkten Winkel eingerichtet ist und der sendende Prüfkopf mindestens eines zweiten Prüfkopfträgers derselben Prüfkopfsonde zu einem Schallaustritt eines Schallbündels unter einem in Bezug auf die Grenzflächennormale am Schallaustrittspunkt im mathematisch negativen Sinn ausgelenkten Winkel eingerichtet ist.

Unter einem "positivem Winkel" ist im Kontext der Erfindung ein solcher Winkel zu verstehen, um den die Bündelachse (bzw. Symmetrieachse) des Schallbündels entgegen des Uhrzeigersinns in Bezug auf die Richtung der Grenzflächennormalen am Schallaustrittspunkt des Prüfkopfs geschwenkt ist. In hierzu analoger Weise ist im Kontext der Erfindung unter einem "negativen Winkel" ein solcher Winkel zu verstehen, um den die Bündelachse des Schallbündels im Uhrzeigersinn in Bezug auf die Richtung der Grenzflächennormalen am Schallaustrittspunkt geschwenkt ist. Es handelt sich hierbei mit anderen Worten um Winkel-Angaben im Bogenmaß. Die Prüfköpfe sind in bevorzugter Weise als Winkelprüfköpfe ausgeführt.

Eine solche erfindungsgemäße Prüfkopfsonde ermöglicht das Einschallen mindestens zweier Schallbündel mit zueinander entgegengesetzt orientierten Einschallrichtungen in dieselbe Prüfzone einer Radsatzwelle, ohne dass hierbei der Prüfvorgang zum Wechseln der Orientierung der Prüfkopfsonde innerhalb der Radsatzwelle unterbrochen werden muss. Mittels einer rotatorischen Drehbewegung der erfindungsgemäßen Prüfkopfsonde um die Längsachse der Innenbohrung wird erreicht, dass der Übergangsbereich einer Radsatzwelle während desselben Prüfvorgangs unterbrechungsfrei von den Schallbündeln mindestens zweier Prüfkopfträger mit zueinander jeweils entgegengesetzter Schallrichtung erfasst wird. Selbst wenn eine in diesem Übergangsbereiche befindliche Inhomogenität aufgrund ihrer zu großen Tiefenlage außerhalb des Detektionsbereiches der ersten Prüfkopfsonde liegt, wird diese dennoch sicher durch die zweite Prüfkopfsonde mit zur ersten Prüfkopfsonde entgegengesetzt orientierter Einschallrichtung erfasst und detektiert. Auf diese Weise kann das gesamte zu prüfende Volumen einer Radsatzwelle in einem unterbrechungsfreien Arbeitsdurchgang geprüft werden. Dies beschleunigt nicht nur den Prüfvorgang, sondern erhöht auch dessen Qualität, da durch den Wegfall des Entnehmens der Prüfvorrichtung aus der Radsatzwelle sowie dem erneuten Einführen der in ihrer relativen Ausrichtung in Bezug auf die Radsatzwelle gewendeten Prüfvorrichtung in die Radsatzwelle, eine potentielle Quelle für Fehler oder Ungenauigkeiten im Prüfvorgang eliminiert wird.

Die Erfindung sieht in besonders bevorzugter Weise vor, dass die Prüfkopfsonde zwei um einen Zwischenwinkel von 180° in Bezug auf die Mittel-Längsachse der Prüfkopfsonde zueinander versetzt angeordnete Prüfkopfträger umfasst. Eine solche in Bezug auf die Mittel-Längsachse der Prüfkopfsonde symmetrische Anordnung ermöglicht eine gleichmäßige und unwuchtfreie Rotation der Prüfkopfsonde sowie eine einfachere Auswertbarkeit der von den Prüfköpfen erfassten Messsignale.

Die Erfindung ist aber nicht auf eine solche symmetrische Anordnung zweier Prüfkopfträger beschränkt, sondern erstreckt sich auch auf Prüfkopfsonden mit einer beliebigen Mehrzahl von Prüfkopfsonden, die mit beliebigen und insbesondere auch unsymmetrischen Zwischenwinkeln zueinander angeordnet sein können, sofern mindestens zwei der Prüfkopfsonden mittels der vorgenannten Ausrichtung ihrer Prüfköpfe zum Einschallen von Schallbündeln mit zueinander entgegengesetzt orientierten Einschallrichtungen in dieselbe Prüfzone der Radsatzwelle eingerichtet sind.

Gemäß einer möglichen Ausführungsvariante der erfinderischen Grundidee sind die Prüfköpfe eines Prüfkopfträgers zu einem aus einer Mehrzahl von Prüfköpfen aufgebauten Array zusammengefasst. Unter einem "Array" ist hierbei eine solche Anordnung von Prüfköpfen zu verstehen, bei der eine Mehrzahl von Prüfköpfen mittels einer Halterung in einer vordefinierten relativen geometrischen Ausrichtung zueinander fixiert sind. Ein solches Array kann wegen der schnellen Umschaltbarkeit zwischen mehreren Prüfkopf-Paaren eine höhere Prüfgeschwindigkeit ermöglichen.

Die Erfindungsidee sieht weiterhin vor, dass die Prüfkopfsonde mittels einer zur Erzeugung einer schraubenförmigen oder mäanderförmigen Bewegung der Prüfkopfsonde um ihre Mittel-Längsachse eingerichteten Antriebseinrichtung sowohl in axialer Richtung entlang einer Längserstreckung der Längsbohrung als auch in rotatorischer Richtung über die Innenfläche der Längsbohrung bewegbar ist. Hierzu ist die Prüfkopfsonde beim bestimmungsgemäßen Gebrauch innerhalb der Innenbohrung einer Radsatzwelle sowohl in axialer Richtung entlang ihrer Mittel-Längsachse als auch in rotatorischer Richtung um die Mittel-Längsachse bewegbar gelagert. Eine solche Antriebsvorrichtung erleichtert die Automatisierung der Anwendung der erfindungsgemäßen Prüfkopfsonde.

Die vorliegende Erfindung wird nachfolgend anhand eines Ausführungsbeispiels und dazugehöriger Zeichnungen näher erläutert. Es zeigen:

Figur 1: schematische Darstellung der Tandemprüfung (Stand der Technik);

Figur 2: schematische Darstellung der Prüfung mit einer erfindungsgemäßen Prüfkopfsonde mit um einen positiven Winkel ausgelenktem Schallbündel;

Figur 3: schematische Darstellung der Prüfung mit einer erfindungsgemäßen Prüfkopfsonde mit um einen negativen Winkel ausgelenktem Schallbündel.

Das Ausführungsbeispiel visualisiert die Prüfung einer randschichtgehärteten Radsatzwelle (10) mittels einer in die innenzentrierte Längsbohrung (11) der Radsatzwelle (10) eingeführten erfindungsgemäßen Prüfkopfsonde (20).

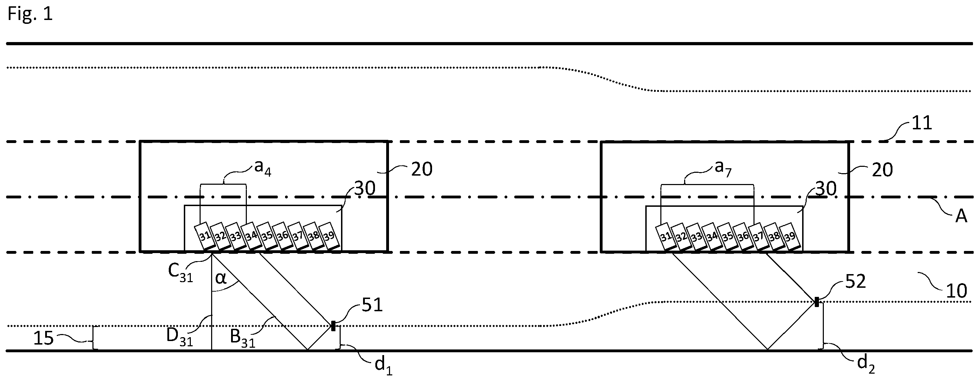

In Figur 1 ist zunächst das aus dem Stand der Technik bekannte Grundprinzip der Tandemprüfung anhand der Prüfung einer randschichtgehärteten Radsatzwelle visualisiert. Die Prüfaufgabe besteht darin, eventuelle Inhomogenitäten (51, 52) in Form von Materialfehlern zu detektieren, die im Grenzbereich zwischen einer gehärteten außenliegenden Randschicht-Zone (15) der Radsatzwelle und einem ungehärteten Innenbereich der Radsatzwelle auftreten. Dieser Übergangsbereich zwischen der Randschicht-Zone (15) und dem ungehärteten Bereich der Radsatzwelle (10) ist in den Figuren des Ausführungsbeispiels in schematischer Weise mittels einer gepunkteten Linie visualisiert (die in der Realität in dieser Form freilich nicht vorhanden ist). Die Prüfkopfsonde (20) ist zur Durchführung der Prüfung in eine innenliegende und innenzentrierte Längsbohrung (11) der Radsatzwelle (10) eingeführt und in dieser derart gelagert, dass sie sowohl axial entlang deren Mittel-Längsachse (A) verschiebbar als auch um diese Mittel-Längsachse (A) rotatorisch drehbar ist. Gemäß des in Bezug auf die Tandemprüfung bekannten Standes der Technik umfasst die Prüfkopfsonde (20) einen Prüfkopfträger (30), dessen vom sendenden Prüfkopf (31) ausgesendetes Schallbündel auf Grund dieser axialen und rotatorischen Lagerung der Prüfkopfsonde in der Längsbohrung (11) der Radsatzwelle (10) die gesamte Randschicht-Zone (15) erfassen und somit eventuelle Inhomogenitäten (51, 52) im Übergangsbereich zur Randschicht-Zone (15) detektieren kann. Das vom sendenden Prüfkopf (31) ausgesendete Schallbündel ist durch seine akustische Achse (B) charakterisiert, welche um den auf die Grenzflächennormale (D) am Schallaustrittspunkt (C) bezogenen Einschallwinkel ($\alpha$) in Bezug auf das Prüfobjekt bzw. die Radsatzwelle geneigt ist. Der Einschallwinkel ($\alpha$) beträgt üblicherweise 35° bis 55°. Das Schallbündel erfährt eine zweifache Reflektion: zuerst an der zur Einschallung nächstliegenden Grenzfläche (das ist die zum Schallaustrittspunkt (C) gegenüberliegende Außenoberfläche der Radsatzwelle (10)) sowie an der Inhomogenität (51, 52). In Abhängigkeit von der Tiefenlage ($d_1$, $d_2$) der jeweiligen Inhomogenität (51, 52) wird das derart reflektierte Signal des Schallbündels an einem der empfangenden Prüfköpfe (32...39) des Prüfkopfträgers (30) empfangen. Das Maximum des Empfangs ist an demjenigen empfangenden Prüfkopf zu erwarten, dessen Abstand (bezogen auf eine zur Mittel-Längsachse (A) parallele Richtung) zum sendenden Prüfkopf (31) die geringste Abweichung zu dem gemäß der geometrischen Beziehung

$$a_i = 2 * d_i * \tan \alpha$$

definierten sog. "Sprungabstand" ($a_1$, $a_2$) aufweist. Hieraus ergibt sich beispielsweise, dass bei typischen Einschallwinkeln ($\alpha$) zwischen 35° und 55° und typischen Abständen ($a_i$) zwischen sendendem Prüfkopf und empfangenden Prüfköpfen eines Prüfkopfträgers zwischen 20 mm und 70 mm Inhomogenitäten in den Tiefenlagen ($d_i$) zwischen 10 mm und 35 mm (gemessen von der Außenfläche der Radsatzwelle) detektierbar sind. Die Prüfkopfsonde (20) ist auf der linken Seite der Figur 1 in einer eine erste Inhomogenität (51) in einer ersten Tiefenlage ($d_1$) detektierenden Stellung sowie auf der rechten Seite der Figur 1 in einer eine zweite Inhomogenität (52) in einer zweiten Tiefenlage ($d_2$) detektierenden Stellung dargestellt.

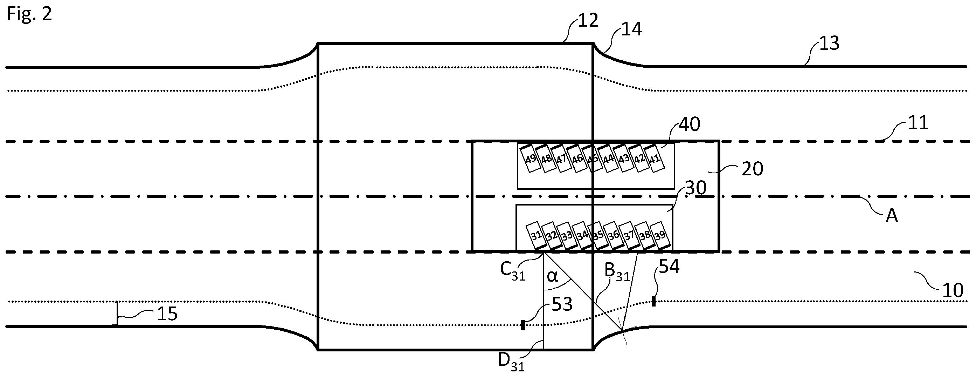

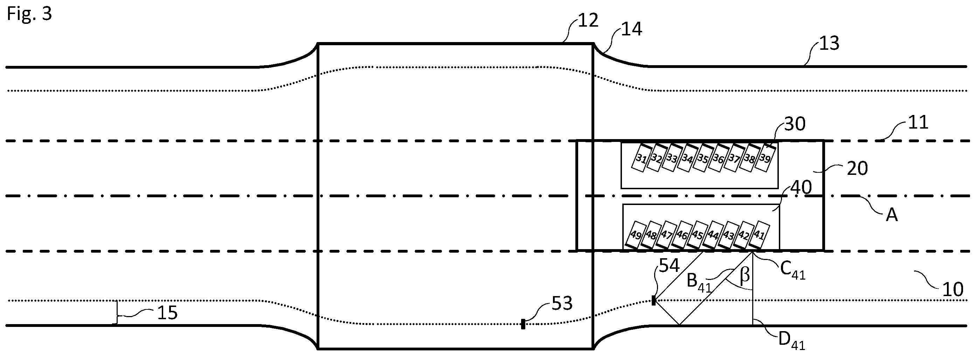

Die Figuren 2 und 3 visualisieren die Prüfung einer Radsatzwelle unter Verwendung einer erfindungsgemäßen Prüfkopfsonde, wobei in Figur 2 die Prüfkopfsonde (20) in einer ersten Stellung und in Figur 3 die Prüfkopfsonde in einer hierzu um 180° um die Mittel-Längsachse (A) der Radsatzwelle (10) gedrehten zweiten Stellung zeigt. Die Radsatzwelle (10) weist Bereiche mit unterschiedlichen Außendurchmessern auf; nämlich einen Wellensitz (12) und beidseitig hieran anschließende Wellenschäfte (13), wobei der Außendurchmesser des Wellensitzes (12) größer als derjenige eines Wellenschaftes (13) ist. Der Außendurchmesser jedes Wellenschafts (13) ist mittels eines Korbbogens (14) an den Wellensitz (12) herangeführt. Im räumlichen Umfeld eines solchen Korbbogens (14) befinden sich mögliche Inhomogenitäten (53, 54), jeweils im Übergangsbereich zwischen der gehärteten außenliegenden Randschicht-Zone (15) und dem innenliegenden Bereich der Radsatzwelle (10), der aus dem nicht verfestigten Grundmaterial der Radsatzwelle gebildet ist. Die Detektion von Inhomogenitäten in diesem Übergangsbereich ist mit der in Figur 1 gezeigten Vorrichtung zur Tandemprüfung jedoch aus nachfolgendem Grund nicht möglich: die Prüfkopfsonde (20) kann in zur Mittel-Längsachse (A) paralleler Richtung zwar derart relativ zur Radsatzwelle (10) positioniert sein, dass der Schallaustrittspunkt des sendenden Winkelprüfkopfs (31) im Bereich des Wellensitzes (12) positioniert ist, hierbei jedoch die akustische Achse des um einen Einschallwinkel ($\alpha$) in Bezug auf die Grenzflächennormale geneigten Schallbündels im Bereich des Korbbogens (14) auf die Außenkontur der Radsatzwelle trifft. Damit trifft das Schallbündel die erste reflektierende Grenzfläche in einem solchen Bereich, der starken Querschnittsänderungen unterworfen ist und insbesondere keine Parallelität zu der für die Schall-Einkopplung vorgesehenen Innenfläche der Längsbohrung aufweist.

Abweichend zum vorgenannten Stand der Technik umfasst die erfindungsgemäße Prüfkopfsonde (20) zusätzlich zum ersten Prüfkopfträger (30) einen weiteren zweiten Prüfkopfträger (40), wobei jeder Prüfkopfträger (30, 40) einen sendenden Winkelprüfkopf (31, 41) sowie eine Mehrzahl von empfangenden Winkelprüfköpfen (32, ...39; 42, ...49) aufweist. Alle Prüfköpfe jedes Prüfkopfträgers sind entlang einer Längserstreckung des Prüfkopfträgers unmittelbar aneinander anschließend angeordnet. Im Ausführungsbeispiel weist jeder Prüfkopfträger (30, 40) acht empfangende Winkelprüfköpfe (32, ...39; 42, ...49) auf. Die Erfindung ist hierdurch jedoch nicht eingeschränkt, sondern unter Verwendung von Prüfkopfträgern mit einer beliebigen Anzahl von empfangenden Prüfköpfen realisierbar. Der zweite Prüfkopfträger (40) ist innerhalb der Prüfkopfsonde (20) in Bezug auf den ersten Prüfkopfträger (30) in einer um 180° um die Mittel-Längsachse (A) der Prüfkopfsonde (20) versetzten Positionierung angeordnet. Die Erfindung ist auch hierdurch nicht eingeschränkt, sondern auch unter Verwendung einer Mehrzahl von Prüfkopfträgern mit beliebigen, insbesondere auch unsymmetrischen Zwischenwinkeln zueinander realisierbar. Gemäß der im Ausführungsbeispiel exemplarisch gezeigten Ausführungsform mit zwei um einen Zwischenwinkel von 180° um die Mittel-Längsachse (A) zueinander versetzten Prüfkopfträgern (30, 40) wird ein definierter Prüfbereich der Radsatzwelle, z.B. der Bereich der Inhomogenitäten (53, 54), während einer vollständigen Drehung der in der Längsbohrung (11) der Radsatzwelle (10) gelagerten Prüfkopfsonde (20) um 360° zwei Mal durch das Schallbündel eines sendenden Prüfkopfes erfasst. Und zwar ein erstes Mal durch das Schallbündel des sendenden Prüfkopfs (31) des ersten Prüfkopfträgers (30) (wie in der Visualisierung der Prüfkopfsonde (20) gemäß Figur 2 dargestellt) und - nach einer Drehung der Prüfkopfsonde (20) um 180° um die Mittel-Längsachse (A) - ein zweites Mal durch das Schallbündel des sendenden Prüfkopfs (41) des zweiten Prüfkopfträgers (40) (wie in der Visualisierung der Prüfkopfsonde (20) gemäß Figur 3 dargestellt).

Während die akustische Achse ($B_{31}$) des vom sendenden Prüfkopf (31) des ersten Prüfkopfträgers (30) ausgesendeten Schallbündels - wie oben in der Erläuterung des Standes der Technik anhand der Figur 1 dargestellt - um einen in Bezug auf die Grenzflächennormale ($D_{31}$) am Schallaustrittspunkt ($C_{31}$) mathematisch positiven ersten Einschallwinkel ($\alpha$) in Bezug auf die Radsatzwelle geneigt ist, so ist die akustische Achse ($B_{41}$) des vom sendenden Prüfkopf (41) des zweiten Prüfkopfträgers (40) ausgesendeten Schallbündels um einen in Bezug auf die Grenzflächennormale ($D_{41}$) am Schallaustrittspunkt ($C_{41}$) mathematisch negativen zweiten Einschallwinkel ($\beta$) in Bezug auf die Radsatzwelle geneigt. Somit wird in den zu prüfenden Bereich der Radsatzwelle (10) während einer einzigen vollständigen Umdrehung der Prüfkopfsonde (20) um die Mittel-Längsachse (A) mit Schallbündeln aus zwei zueinander gegenläufigen Richtungen eingeschallt.

Bei der in Figur 2 dargestellten Ansicht befindet sich die Prüfkopfsonde (20) in einer solchen relativen ersten Stellung in Bezug auf die Radsatzwelle (10), dass der erste Prüfkopfträger (30) mit dem im mathematisch positiven Sinn ausgelenkten ersten Einschallwinkel ($\alpha$)

dem zu prüfenden Bereich der Radsatzwelle (10) am nächsten liegt und die Inhomogenitäten (53, 54) einer Einschallung unter dem ersten Einschallwinkel ($\alpha$) unterliegen.

Bei der in Figur 3 dargestellten Ansicht ist die Prüfkopfsonde (20) hingegen gegenüber der vorgenannten ersten Stellung um 180° um die Mittel-Längsachse (A) der Radsatzwelle (10) gedreht und befindet sich in einer solchen relativen zweiten Stellung in Bezug auf die Radsatzwelle (10), dass der zweite Prüfkopfträger (40) mit dem im mathematisch negativen Sinn ausgelenkten zweiten Einschallwinkel ($\beta$) dem zu prüfenden Bereich der Radsatzwelle (10) am nächsten liegt und die Inhomogenitäten (53, 54) einer Einschallung unter dem zweiten Einschallwinkel ($\beta$) unterliegen.

Die relative Anordnung des sendenden Winkelprüfkopfes (41) in Bezug auf die empfangenden Winkelprüfköpfe (42...49) ist hierbei beim zweiten Prüfkopfträger (40) invers bzw. spiegelbildlich zur diesbezüglichen relativen Anordnung von sendendem Winkelprüfkopf (31) und empfangenden Winkelprüfköpfen (32... 39) des ersten Prüfkopfträgers (30). Während beim ersten Prüfkopfträger (30) der sendende Prüfkopf (31) an einer in Bezug auf eine Längserstreckungsrichtung des Prüfkopfträgers ersten Position vor den empfangenden Prüfköpfen (32...39) angeordnet ist, so ist diese Anordnung beim zweiten Prüfkopfträger in Bezug auf dieselbe Längserstreckungsrichtung diametral entgegengesetzt; d.h. der sendende Prüfkopf (41) ist dort an einer in Bezug auf die Längserstreckungsrichtung des Prüfkopfträgers letzten Position nach den empfangenden Prüfköpfen (42...49). Dies ist insofern notwendig, damit das Schallbündel des sendenden Prüfkopfs (41) gemäß des anhand vorgenannter Figur 1 erläuterten Grundprinzips der Tandemprüfung bei Reflexion an einer als Grenzfläche wirkenden Außenoberfläche der Radsatzwelle auf die Anordnung der empfangenden Prüfköpfe (42...49) trifft.

**Bezugszeichenliste:**

| 10 | Radsatzwelle |
|---|---|
| 11 | Längsbohrung |
| 12 | Wellensitz |
| 13 | Wellenschaft |
| 14 | Korbbogen |
| 15 | Randschicht-Zone |
| A | Mittel-Längsachse der Radsatzwelle |
| 20 | Prüfkopfsonde |
| 30 | erster Prüfkopfträger |
| 31 | sendender Winkelprüfkopf des ersten Prüfkopfträgers |
| $\alpha$ | erster Einschallwinkel |
| B, $B_{31}$, $B_{41}$ | akustische Achse des Schallbündels |
| C, $C_{31}$, $C_{41}$ | Schallaustrittspunkt |
| D, $D_{31}$, $D_{41}$ | Grenzflächennormale am Schallaustrittspunkt |

| 32...39 | empfangende Winkelprüfköpfe des ersten Prüfkopfträgers |
|---|---|
| 40 | zweiter Prüfkopfträger |
| 41 | sendender Winkelprüfkopf des zweiten Prüfkopfträgers |
| β | zweiter Einschallwinkel |
| 42...49 | empfangende Winkelprüfköpfe des zweiten Prüfkopfträgers |
| 51...54 | Inhomogenität |
| $d_1$. $d_2$ | Tiefenlage einer Inhomogenität |
| $a_1$, $a_2$ | Sprungabstand zwischen sendendem und empfangendem Prüfkopf |

## Patentansprüche

1. Prüfkopfsonde (20) zur Ultraschall-Prüfung von Radsatzwellen (10) mit innenliegender Längsbohrung (11), umfassend eine Mehrzahl von zueinander in Bezug auf eine zentrale Mittel-Längsachse (A) der Prüfkopfsonde (20) um jeweils einen Zwischenwinkel versetzt angeordneten Prüfkopfträgern (30, 40), **dadurch gekennzeichnet, dass** die Prüfkopfträger (30, 40) simultan um diese Mittel-Längsachse (A) drehbar gelagert sind, wobei jeder Prüfkopfträger (30, 40) aufgebaut ist aus einem sendenden Prüfkopf (31, 41) und einer Mehrzahl von entlang einer zur Mittel-Längsachse (A) parallelen Längserstreckung der Prüfkopfsonde (20) angeordneten empfangenden Prüfköpfen (32...39; 42...49), wobei der sendende Prüfkopf (31) mindestens eines ersten Prüfkopfträgers (30) der Prüfkopfsonde (20) zu einem Schallaustritt eines Schallbündels unter einem in Bezug auf eine Grenzflächennormale ($D_{31}$) am Schallaustrittspunkt ($C_{31}$) im mathematisch positiven Sinn ausgelenkten Winkel ($\alpha$) eingerichtet ist und der sendende Prüfkopf (41) mindestens eines zweiten Prüfkopfträgers (40) derselben Prüfkopfsonde (20) zu einem Schallaustritt eines Schallbündels unter einem in Bezug auf die Grenzflächennormale ($D_{41}$) am Schallaustrittspunkt ($C_{41}$) im mathematisch negativen Sinn ausgelenkten Winkel ($\beta$) eingerichtet ist.

2. Prüfkopfsonde nach Patentanspruch 1, **dadurch gekennzeichnet, dass** die Prüfkopfsonde (20) zwei um einen Zwischenwinkel von 180° in Bezug auf die Mittel-Längsachse (A) der Prüfkopfsonde (20) zueinander versetzt angeordnete Prüfkopfträger (30, 40) umfasst.

3. Prüfkopfsonde nach Patentanspruch 1 oder 2, **dadurch gekennzeichnet, dass** die Prüfköpfe eines Prüfkopfträgers zu einem aus einer Mehrzahl von Prüfköpfen aufgebauten Array zusammengefasst sind.

## Claims

1. Test head probe (20) for ultrasonic testing of wheel set shafts (10) with an internal longitudinal hole (11), comprising a plurality of test head carriers (30, 40) which are arranged offset by an intermediate angle with respect to a longitudinal center axis (A) of the test head probe (20), **characterized in that** the test head carriers (30, 40) are supported so as to be able to be rotated simultaneously about this longitudinal center axis (A), wherein each test head carrier (30, 40) is constructed from one transmitting test head (31, 41) and a plurality of receiving test heads (32...39; 42...49) which are arranged along a longitudinal extent of the test head probe (20) which is parallel with the longitudinal center axis (A), wherein the transmitting test head (31) of at least a first test head carrier (30) of the test head probe (20) is configured for a sound output of a sound beam at an angle ($\alpha$) which is deflected with respect to an interface normal ($D_{31}$) at the noise output location ($C_{31}$) in the mathematically positive sense and the transmitting test head (41) of at least a second test head carrier (40) of the same test head probe (20) is configured for sound output of a sound beam at an angle ($\beta$) which is deflected with respect to the interface normal ($D_{41}$) at the noise output location ($C_{41}$) in the mathematically negative sense.

2. Test head probe according to patent claim 1, **characterized in that** the test head probe (20) comprises two test head carriers (30, 40) which are arranged offset relative to each other at an intermediate angle of 180° with respect to the longitudinal center axis (A) of the test head probe (20).

3. Test head probe according to patent claim 1 or 2, **characterized in that** the test heads of a test head carrier are combined to form an array which is constructed from a plurality of test heads.

## Revendications

1. Sonde à tête de test (20) pour la vérification par ultrasons d'arbres d'essieu (10) avec un alésage longitudinal (11) intérieur, comprenant une pluralité de supports de tête de test (30, 40) agencés en déport les uns des autres autour respectivement d'un angle intermédiaire par rapport à un axe longitudinal médian (A) central de la sonde à tête de test (20), **caractérisée en ce que** les supports de tête de test (30, 40) sont logés de manière rotative simultanément autour de cet axe longitudinal médian (A), dans laquelle chaque support de tête de test (30, 40) est constitué d'une tête de test (31, 41) émettrice et d'une pluralité de têtes de test (32...39 ; 42...49) réceptrices agencées le long d'une étendue longitudinale parallèle à l'axe longitudinal médian (A) de la sonde à tête de test (20), dans laquelle la tête de test (31) émettrice au moins d'un premier support de tête de test (30) de la sonde à tête de test (20) est conçue pour une sortie sonore d'un faisceau sonore selon un angle ($\alpha$) dévié par rapport à une normale de surface limite ($D_{31}$) au niveau du point de sortie sonore ($C_{31}$) au sens mathématiquement positif, et la tête de sonde (41) émettrice au moins d'un second support de tête de test (40) de la même sonde à tête de test (20) est conçue pour une sortie sonore d'un faisceau sonore selon un angle ($\beta$) dévié par rapport à la normale de surface limite ($D_{41}$) au niveau du point de sortie sonore ($C_{41}$) au sens mathématiquement négatif.

2. Sonde à tête de test selon la revendication 1, **caractérisée en ce que** la sonde à tête de test (20) comprend deux supports de tête de test (30, 40) agencés en déport l'un de l'autre autour d'un angle intermédiaire de 180° par rapport à l'axe longitudinal médian (A) de la sonde à tête de test (20).

3. Sonde à tête de test selon la revendication 1 ou 2, **caractérisée en ce que** les têtes de test d'un support de tête de test sont réunies en un ensemble constitué d'une pluralité de têtes de test.

Fig. 1

11
20
A
10
30
a_7
31 32 33 34 35 36 37 38 39
52
d_2

20
30
a_4
31 32 33 34 35 36 37 38 39
51
α
C_31
B_31
D_31
d_1
15

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7178418 B2
- US 20190360976 A1